# EUROPÄISCHE PATENTSCHRIFT

(11) **EP 1 419 545 B1**
(45) Veröffentlichungstag und Bekanntmachung des Hinweises auf die Patenterteilung: **12.04.2006**
(21) Anmeldenummer: 02796250.5
(22) Anmeldetag: 21.08.2002
(51) Int. Cl.: H01M 8/06, C10L 3/10, C01B 3/38

(54) **VERFAHREN UND VORRICHTUNG ZUR ERZEUGUNG EINES ENTSCHWEFELTEN BRENNGASES FÜR BRENNSTOFFZELLEN**
METHOD AND DEVICE FOR PRODUCING A DESULPHURISED FUEL GAS FOR FUEL CELLS
PROCEDE ET DISPOSITIF DE PRODUCTION D'UN GAZ COMBUSTIBLE DESULFURE POUR DES CELLULES ELECTROCHIMIQUES

(30) Priorität: 23.08.2001 DE 10141355
(43) Veröffentlichungstag der Anmeldung: 19.05.2004
(73) Patentinhaber: MTU CFC Solutions GmbH, 85521 Ottobrunn (DE)
(72) Erfinder: BISCHOFF, Manfred, 83620 Feldkirchen (DE)
(74) Vertreter: Winter, Josef
(86) Internationale Anmeldenummer: PCT/EP2002/009317
(87) Internationale Veröffentlichungsnummer: WO 2003/019710

(56) Entgegenhaltungen:
- EP-A- 0 427 869
- EP-A- 0 565 025
- US-A- 5 213 912
- US-A- 6 103 206

## Beschreibung

Die Erfindung betrifft ein Verfahren zur Erzeugung eines entschwefelten Brenngases für Brennstoffzellen, bei dem das Brenngas, insbesondere Erdgas, entschwefelt und der Schwefelgehalt des entschwefelten Brenngases überwacht wird. Weiterhin betrifft die Erfindung eine Vorrichtung zur Erzeugung eines entschwefelten Brenngases für Brennstoffzellen, mit einer von dem Brenngas, insbesondere Erdgas, durchströmten Entschwefelungseinrichtung und einer der Entschwefelungseinrichtung nachgeschalteten Detektoreinrichtung zur Überwachung des Schwefelgehaltes des entschwefelten Brenngases.

Beim Betrieb von Brennstoffzellen besteht die Gefahr, dass die zur Vorbehandlung des für den Betrieb erforderlichen Brenngases verwendeten Reformierkatalysatoren durch im Brenngas enthaltenen Schwefel deaktiviert und irreversibel beschädigt werden können. Daher sind den Reformierkatalysatoren Entschwefelungseinrichtungen in Form von beispielsweise Aktivkohlefiltern vorgeschaltet. Diese Filter unterliegen im Laufe des Betriebs einer Erschöpfung verbunden mit einem Rückgang der Entschwefelungsleistung. Bisher wurde versucht, aus der Absorptionskapazität des Filtermaterials in Verbindung mit der durchgesetzten Gasmenge und dem Schwefelgehalt im unbehandelten Brenngas die Standzeit des Filters zu berechnen. Aufgrund von Schwankungen des Schwefelgehaltes im Brenngas und aufgrund von nicht genau bekannten Einflüssen weiterer Bestandteile des Brenngases auf das Absorptionsverhalten des Filtermaterials ist dieses Verfahren jedoch mit einer hohen Unsicherheit behaftet. Eine kontinuierliche Überwachung des Schwefelgehaltes des Brenngases mit üblichen Analysegeräten und dessen Integration über die Zeit ist technisch sehr aufwendig und aus Kostengründen nicht vorteilhaft. Wegen der großen negativen Folgen im Falle eines Schwefeldurchbruchs zu den Brennstoffzellen ist eine zuverlässige Überwachung des Brenngases auf seinen Schwefelgehalt im Zuge der Brenngaserzeugung jedoch von großer Wichtigkeit.

Aus der US 5,213,912 eine Brennstoffzellenanordnung mit einer Entschwefelungseinrichtung bekannt, die durch ein Sorptionsfilter gebildet ist. Bei Sättigung mit Schwefelkompanenten soll das Filter ausgewechselt oder regeneriert werden.

Aus der EP 0 565 025 A 1 ist ein Verfahren zur Erzeugung eines entschwefelten Brenngases für Brennstoffzellen bekannt, bei dem das Brenngas mittels einer Kupfer-Nickel-Legierung entschwefelt wird.

In der US 6,103,206 ist ein Verfahren zum Entschwefeln eines gasförmigen Kohlenwasserstoffs offenbart. Der entschwefelte Kohlenwasserstoff wird in einer Wirbelschicht-Reformieranlage zu Synthesegas weiterverarbeitet. Da die Anwesenheit von Schwefel bei der Reformierung zur Deaktivierung des Katalysators führen kann, wird die Wirksamkeit der Entschwefelungseinrichtung durch Messen des Methangehalts des Synthesegases ermittelt. Der Methangehalt hängt von der Methanumwandlung in der Wirbelschicht-Reformieranlage ab, und damit von der Aktivität des Dampfreformierungskatalysators. Ein Rückgang der Methanumwandlung wird somit als Signal für ein Ansteigen des Schwefelgehalts des entschwefelten Kohlenwasserstoffs gewertet.

Die Aufgabe der Erfindung ist es, Verfahren und Vorrichtung zur Erzeugung eines entschwefelten Brenngases für Brennstoffzellen, bei dem das Brenngas, insbesondere Erdgas, entschwefelt und der Schwefelgehalt des entschwefelten Brenngases überwacht wird, anzugeben, bei denen die Überwachung des Brenngases auf seinen Schwefelgehalt auf einfache Weise und mit großer Zuverlässigkeit erfolgt.

Durch die Erfindung wird ein Verfahren zur Erzeugung eines entschwefelten Brenngases für Brennstoffzellen geschaffen, bei dem das Brenngas, insbesondere Erdgas, entschwefelt, das entschwefelte Brenngas einem Reformierkatalysator zugeführt, und der Schwefelgehalt des entschwefelten Brenngases überwacht wird, indem der Ablauf des Reformierprozesses überwacht wird. Es ist vorgesehen, dass ein Teilstrom des entschwefelten Brenngases durch einem separaten Reformierkatalysator einer Detektoreinrichtung geführt und einem endothermen Reformierprozess unterzogen wird, und dass ein Rückgang des Wärmebedarfs des Reformierprozesses als ein Signal für ein Ansteigen des Schwefelgehaltes des Brenngases gewertet wird.

Ein wesentlicher Vorteil des erfindungsgemäßen Verfahrens ist es, dass die Gefahr einer irreversiblen Schädigung der Brenngaskatalysatoren weitgehend vermindert und damit die Betriebssicherheit der Anlage wesentlich erhöht wird. Ein weiterer Vorteil ist es, dass das eingesetzte Filtermaterial optimal genutzt werden kann. Schließlich ist die kostengünstige Möglichkeit der Realisierung von Vorteil.

Gemäß einer besonders vorteilhaften Ausführungsform der Erfindung ist es vorgesehen, dass zur Überwachung des Ablaufs des Reformierprozesses dessen Wärmebedarf gemessen wird.

Gemäß einer vorteilhaften Ausführungsform hiervon ist es vorgesehen, dass der endotherme Reformierprozess adiabatisch durchgeführt und dabei die Temperaturerniedrigung ΔT des Brenngases gemessen wird.

Gemäß einer vorteilhaften Ausführungsform ist es vorgesehen, dass eine Verminderung der Temperaturerniedrigung ΔT als Maß für einen Anstieg des Schwefelgehaltes im Brenngas gewertet wird.

Vorzugsweise wird bei Unterschreiten eines vorgegebenen Wertes ΔTgrenz für die Temperaturerniedrigung ΔT ein Alarmsignal abgegeben.

Gemäß einer alternativen Ausführungsform der Erfindung ist es vorgesehen, dass der endotherme Reformierprozess unter Zuführung von Wärme isotherm durchgeführt und dabei die zugeführte Wärmemenge ΔQ gemessen wird.

Gemäß einer vorteilhaften Ausführungsform hiervon ist es vorgesehen, dass eine Verkleinerung der zugeführten Wärmemenge ΔQ als MaB für einen Anstieg des Schwefelgehaltes im Brenngas gewertet wird.

Gemäß einer vorteilhaften Weiterbildung hiervon ist es vorgesehen, dass die Zuführung der Wärme durch elektrische Beheizung erfolgt, und dass zur Bestimmung der zugeführten Wärmemenge ΔQ die aufgebrachte elektrische Leistung gemessen wird.

Vorzugsweise ist es vorgesehen, dass bei Unterschreiten eines vorgegebenen Wertes ΔQgrenz für die zugeführte Wärmemenge ΔQ ein Alarmsignal abgegeben wird.

Vorzugsweise wird bei Auftreten des Alarmsignals die Erzeugung des Brenngases unterbrochen oder eine Maßnahme zur Verbesserung der Entschwefelung des Brenngases getroffen.

Weiterhin wird durch die Erfindung eine Vorrichtung zur Erzeugung eines entschwefelten Brenngases geschaffen, insbesondere Erdgas, für Brennstoffzellen, mit einer von dem Brenngas durchströmten Entschwefelungseinrichtung und einem der Entschwefelungseinrichtung nachgeschalteten Reformierkatalysator, wobei zur Überwachung des Schwefelgehaltes des entschwefelten Brenngases eine Überwachungseinrichtung zur Überwachung des Ablaufs des Reformierprozesses vorgesehen ist. Erfindungsgemäß ist es vorgesehen, dass der Entschwefelungseinrichtung eine Detektoreinrichtung nachgeschaltet ist, die einen von einem Teilstrom des entschwefelten Brenngases durchströmten Reformierkatalysator und die Überwachungseinrichtung zur Überwachung des Ablaufs des in dem Reformierkatalysator ablaufenden endothermen Reformierprozesses umfasst, wobei die Überwachungseinrichtung so ausgebildet ist, dass sie in Ansprache auf einen Rückgang des Reformierprozesses ein das Ansteigen des Schwefelgehaltes des Brenngases repräsentierendes Signal erzeugt.

Gemäß einer bevorzugten Ausführungsform der Erfindung ist die Überwachungseinrichtung so ausgebildet, dass zur Überwachung des Ablaufs des Reformierprozesses dessen Wärmebedarf gemessen wird.

Gemäß einer besonders vorteilhaften Ausführungsform der Erfindung ist es vorgesehen, dass der Reformierkatalysator zur adiabatischen Durchführung des Reformierprozesses ausgebildet ist, und dass die Überwachungseinrichtung Mittel zur Messung der Temperaturerniedrigung ΔT des Brenngases umfasst.

Vorzugsweise ist die Überwachungseinrichtung so ausgebildet, dass eine Verminderung der Temperaturerniedrigung ΔT als Maß für einen Anstieg des Schwefelgehaltes im Brenngas gewertet wird.

Vorzugsweise enthält die Überwachungseinrichtung Mittel zur Erzeugung eines Alarmsignals bei Unterschreiten eines vorgegebenen Wertes ΔTgrenz für die Temperaturerniedrigung ΔT.

Gemäß einer alternativen Ausführungsform der Erfindung ist der Reformierkatalysator zur isothermen Durchführung des endothermen Reformierprozesses unter Zuführung von Wärme ausgebildet, und die Überwachungseinrichtung umfasst Mittel zur Messung der dem Reformierprozess zugeführten Wärmemenge ΔQ.

Vorzugsweise ist die Überwachungseinrichtung so ausgebildet, dass eine Verkleinerung der zugeführten Wärmemenge ΔQ als Maß für einen Anstieg des Schwefeigehaltes im Brenngas gewertet wird.

Gemäß einer besonders vorteilhaften Ausführungsform der Erfindung ist es vorgesehen, dass die Detektoreinrichtung Mittel zur Zuführung der Wärme zu dem Reformierkatalysator durch elektrische Beheizung enthält, und dass die Überwachungseinrichtung zur Bestimmung der zugeführten Wärmemenge ΔQ durch Messung der aufgebrachten elektrischen Leistung ausgebildet ist.

Vorzugsweise enthält die Überwachungseinrichtung Mittel zur Erzeugung eines Alarmsignals bei Unterschreiten eines vorgegebenen Wertes ΔQgrenz für die zugeführte Wärmemenge ΔQ.

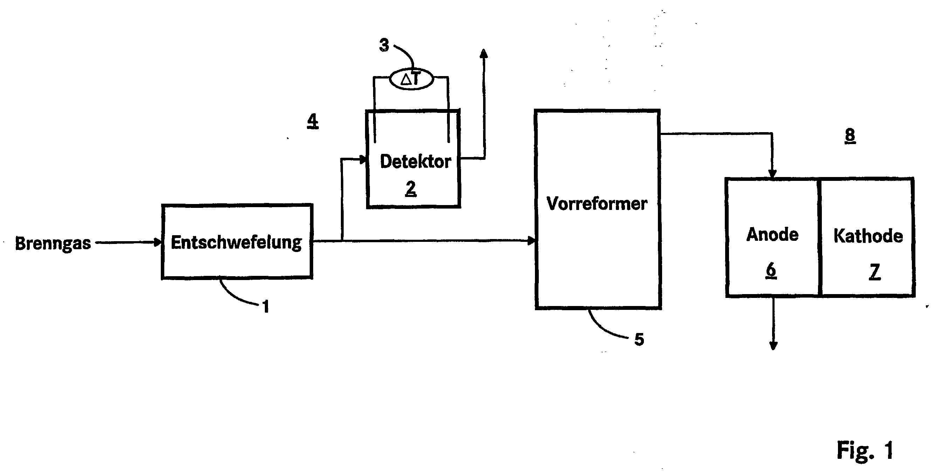

Gemäß einer anderen vorteilhaften Ausführungsform der Erfindung ist der Reformierkatalysator der Detektoreinrichtung als Bestandteil eines den Brennstoffzellen vorgeschalteten, zur Reformierung des diesen zum Betrieb zugeführten Brenngases dienenden Reformierkatalysators vorgesehen oder durch diesen gebildet. Im Folgenden werden Ausführungsbeispiele der Erfindung anhand der Zeichnung erläutert.

Die Figur zeigt ein schematisiertes Schaltbild einer Brennstoffzellenanordnung, bei der das Brenngas unter Entschwefelung und Überwachung des Schwefelgehaltes des entschwefelten Brenngases gemäß Ausführungsbeispielen der Erfindung erzeugt wird.

In der Figur ist eine Brennstoffzellenanordnung dargestellt, die eine Anode 6 und eine Kathode 7 enthaltende Brennstoffzelle 8 stellvertretend für typischerweise eine Anzahl von in einem Brennstoffzellenstapel angeordneten Brennstoffzellen zeigt. Der Brennstoffzelle 8 vorgeschaltet ist ein Reformierkatalysator 5, in welchem das zum Betrieb der Brennstoffzellen dienende Brenngas zur Vorbehandlung einem Reformierprozess unterzogen wird. Dem Reformierkatalysator 5 ist seinerseits eine Entschwefelungseinrichtung 1 vorgeschaltet, die dazu dient, einen in dem Brenngas enthaltenen Gehalt an Schwefel oder Schwefelverbindungen zu vermindern. Das Brenngas, welches insbesondere in Form von Erdgas vorliegen kann, wird der Anordnung zugeführt.

Eine Vorrichtung zur Erzeugung eines entschwefelten Brenngases enthält somit eine von dem Brenngas durchströmte Entschwefelungseinrichtung 1 und eine der Entschwefelungseinrichtung 1 nachgeschaltete insgesamt mit dem Bezugszeichen 4 bezeichnete Detektoreinrichtung, die zur Überwachung des Schwefelgehaltes des entschwefelten Brenngases dient.

Die Detektoreinrichtung umfasst einen von einem Teilstrom des entschwefelten und zusätzlich befeuchteten Brenngases durchströmten Reformierkatalysator 2 und eine mit diesem gekoppelte Überwachungseinrichtung 3 zur Überwachung des Ablaufs des in dem Reformierkatalysator 2 ablaufenden Reformierprozesses. Die Überwachungseinrichtung:3 ist so ausgebildet, dass sie in Ansprache auf einen Rückgang des Reformierprozesses ein das Ansteigen des Schwefelgehaltes des Brenngases repräsentierendes Signal erzeugt. Hierzu wird zur Überwachung des Ablaufs des Reformierprozesses dessen Wärmebedarf gemessen.

Gemäß einem ersten Ausführungsbeispiel der Erfindung ist der Reformierkatalysator 2 zur adiabatischen Durchführung des endothermen Reformierprozesses ausgebildet, und die Überwachungseinrichtung 3 umfasst Mittel zur Messung der Temperaturerniedrigung ΔT des Brenngases bei diesem Prozess. Die Überwachungseinrichtung 3 ist so ausgebildet, dass eine Verminderung der Temperaturerniedrigung ΔT als Maß für einen Anstieg des Schwefelgehaltes im Brenngas gewertet wird.

Die Überwachungseinrichtung 3 enthält weiterhin Mittel zur Erzeugung eines Alarmsignals bei Unterschreiten eines vorgegebenen Wertes ΔTgrenz für die Temperaturerniedrigung ΔT. Bei Auftreten des Alarmsignals kann die Erzeugung des Brenngases unterbrochen oder eine Maßnahme zur Verbesserung der Entschwefelung des Brenngases getroffen werden.

Gemäß einem zweiten Ausführungsbeispiel der Erfindung ist der Reformierkatalysator 2 zur isothermen Durchführung des Reformierprozesses unter Zuführung von Wärme ausgebildet, und die Überwachungseinrichtung 3 umfasst Mittel zur Messung der zugeführten Wärmemenge ΔQ. Die Überwachungseinrichtung 3 ist so ausgebildet, dass eine Verkleinerung der zugeführten Wärmemenge ΔQ als Maß für einen Anstieg des Schwefelgehaltes im Brenngas gewertet wird.

Bei dem hier beschriebenen Ausführungsbeispiel enthält die Detektoreinrichtung 4 (in der Figur nicht gezeigte) Mittel zur Zuführung von Wärme zu dem Reformierkatalysator 2 durch elektrische Beheizung, und die Überwachungseinrichtung 3 ist zur Bestimmung der zugeführten Wärmemenge ΔQ durch Messung der aufgebrachten elektrischen Leistung ausgebildet.

Auch hier enthält die Überwachungseinrichtung 3 Mittel zur Erzeugung eines Alarmsignals bei Unterschreiten eines vorgegebenen Wertes ΔQgrenz für die zugeführte Wärmemenge ΔQ. Bei Auftreten des Alarmsignals kann die Erzeugung des Brenngases unterbrochen oder eine Maßnahme zur Verbesserung der Entschwefelung des Brenngases getroffen werden.

Der Reformierkatalysator 2 der Detektoreinrichtung 4 kann, wie bei den beiden vorstehend beschriebenen Ausführungsbeispielen der Erfindung als ein separater Katalysator vorgesehen sein, der allein der Überwachung des Schwefelgehaltes des Brenngases dient. Das den Reformierkatalysator 2 verlassende Brenngas, das nur einen kleinen Teilstrom des gesamten Brenngasstroms darstellt, kann entweder ungenutzt bleiben oder dem Reformierkatalysator 5 oder direkt der Anode 6 der Brennstoffzelle 8 zugeführt und somit auch genutzt werden.

## Patentansprüche

1. Verfahren zur Erzeugung eines entschwefelten Brenngases für Brennstoffzellen, bei dem das Brenngas, insbesondere Erdgas, entschwefelt, und das entschwefelte Brenngas einem Reformierkatalysator (5) zugeführt wird, und der Schwefelgehalt des entschwefelten Brenngases überwacht wird, indem der Ablauf des Reformierprozesses überwacht wird, **dadurch gekennzeichnet, dass** ein Teilstrom des entschwefelten Brenngases durch einen separaten Reformierkatalysator (2) einer Detektoreinrichtung (4) geführt und einem endothermen Reformierprozess unterzogen wird, und dass ein Rückgang des Wärmebedarfs des Reformierprozesses als ein Signal für ein Ansteigen des Schwefelgehaltes des Brenngases gewertet wird.

2. Verfahren nach Anspruch 1, **dadurch gekennzeichnet, dass** zur Überwachung des Ablaufs des Reformierprozesses dessen Wärmebedarf gemessen wird.

3. Verfahren nach Anspruch 2, **dadurch gekennzeichnet, dass** der Reformierprozess adiabatisch durchgeführt und dabei die Temperaturerniedrigung ΔT des Brenngases gemessen wird.

4. Verfahren nach Anspruch 3, **dadurch gekennzeichnet, dass** eine Verminderung der Temperaturerniedrigung ΔT als Maß für einen Anstieg des Schwefelgehaltes im Brenngas gewertet wird.

5. Verfahren nach Anspruch 4, **dadurch gekennzeichnet, dass** bei Unterschreiten eines vorgegebenen Wertes ΔTgrenz für die Temperaturerniedrigung ΔT ein Alarmsignal abgegeben wird.

6. Verfahren nach Anspruch 2, **dadurch gekennzeichnet, dass** der Reformierprozess unter Zuführung von Wärme isotherm durchgeführt und dabei die zugeführte Wärmemenge ΔQ gemessen wird.

7. Verfahren nach Anspruch 6, **dadurch gekennzeichnet, dass** eine Verkleinerung der zugeführten Wärmemenge ΔQ als Maß für einen Anstieg des Schwefelgehaltes im Brenngas gewertet wird.

8. Verfahren nach Anspruch 6 oder 7, **dadurch gekennzeichnet, dass** die Zuführung der Wärme durch elektrische Beheizung erfolgt, und dass zur Bestimmung der zugeführten Wärmemenge ΔQ die aufgebrachte elektrische Leistung gemessen wird.

9. Verfahren nach Anspruch 7 oder 8, **dadurch gekennzeichnet, dass** bei Unterschreiten eines vorgegebenen Wertes ΔQgrenz für die zugeführte Wärmemenge ΔQ ein Alarmsignal abgegeben wird.

10. Verfahren nach Anspruch 5 oder 9, **dadurch gekennzeichnet, dass** bei Auftreten des Alarmsignals die Erzeugung des Brenngases unterbrochen oder eine Maßnahme zur Verbesserung der Entschwefelung des Brenngases getroffen wird.

11. Vorrichtung zur Erzeugung eines entschwefelten Brenngases, insbesondere Erdgas, für Brennstoffzellen, mit einer von dem Brenngas durchströmten Entschwefelungseinrichtung (1), der ein Reformierkatalysator (5) nachgeschaltet ist, und wobei zur Überwachung des Schwefelgehalts des entschwefelten Brenngases eine Überwachungseinrichtung zur Überwachung des Ablaufs des Reformierprozesses vorgesehen ist, **dadurch gekennzeichnet, dass** der Entschwefelungseinrichtung (1) zur Überwachung des Schwefelgehaltes des entschwefelten Brenngases eine Detektoreinrichtung (4) nachgeschaltet ist, die einen von einem Teilstrom des entschwefelten Brenngases durchströmten Refornnierkatalysator (2) und die Überwachungseinrichtung (3) zur Überwachung des Ablaufs des in dem Reformierkatalysator (2) ablaufenden endothermen Reformierprozesses umfasst, wobei die Überwachungseinrichtung (3) so ausgebildet ist, dass sie in Ansprache auf einen Rückgang des Reformierprozesses ein das Ansteigen des Schwefelgehaltes des Brenngases repräsentierendes Signal erzeugt.

12. Vorrichtung nach Anspruch 11, **dadurch gekennzeichnet, dass** die Überwachungseinrichtung (3) so ausgebildet ist, dass zur Überwachung des Ablaufs des Reformierprozesses dessen Wärmebedarf gemessen wird.

13. Vorrichtung nach Anspruch 12, **dadurch gekennzeichnet, dass** der Reformierkatalysator (2) zur adiabatischen Durchführung des Reformierprozesses ausgebildet ist, und dass die Überwachungseinrichtung (3) Mittel zur Messung der Temperaturerniedrigung ΔT des Brenngases umfasst.

14. Vorrichtung nach Anspruch 13, **dadurch gekennzeichnet, dass** die Überwachungseinrichtung (3) so ausgebildet ist, dass eine Verminderung der Temperaturerniedrigung ΔT als Maß für einen Anstieg des Schwefelgehaltes im Brenngas gewertet wird.

15. Vorrichtung nach Anspruch 14, **dadurch gekennzeichnet, dass** die Überwachungseinrichtung (3) Mittel zur Erzeugung eines Alarmsignals bei Unterschreiten eines vorgegebenen Wertes ΔTgrenz für die Temperaturerniedrigung ΔT enthält.

16. Vorrichtung nach Anspruch 12, **dadurch gekennzeichnet, dass** der Reformierkatalysator (2) zur isothermen Durchführung des Reformierprozesses unter Zuführung von Wärme ausgebildet ist, und dass die Überwachungseinrichtung (3) Mittel zur Messung der zugeführten Wärmemenge ΔQ umfasst.

17. Vorrichtung nach Anspruch 16, **dadurch gekennzeichnet, dass** die Überwachungseinrichtung (3) so ausgebildet ist, dass eine Verkleinerung der zugeführten Wärmemenge ΔQ als Maß für einen Anstieg des Schwefelgehaltes im Brenngas gewertet wird.

18. Vorrichtung nach Anspruch 16 oder 17, **dadurch gekennzeichnet, dass** die Detektoreinrichtung (4) Mittel zur Zuführung der Wärme zu dem Reformierkatalysator (2) durch elektrische Beheizung enthält, und dass die Überwachungseinrichtung (3) zur Bestimmung der zugeführten Wärmemenge ΔQ durch Messung der aufgebrachten elektrischen Leistung ausgebildet ist.

19. Vorrichtung nach Anspruch, 17 oder 18, **dadurch gekennzeichnet, dass** die Überwachungseinrichtung (3) Mittel zur Erzeugung eines Alarmsignals bei Unterschreiten eines vorgegebenen Wertes ΔQgrenz für die zugeführte Wärmemenge ΔQ enthält.

20. Vorrichtung nach einem der Ansprüche 11 bis 19, **dadurch gekennzeichnet, dass** der Reformierkatalysator (2) der Detektoreinrichtung (4) als Bestandteil eines den Brennstoffzellen vorgeschalteten, zur Reformierung des diesen zum Betrieb zugeführten Brenngases dienenden Reformierkatalysators (5) vorgesehen ist.

## Claims

1. Method for producing desulphurized fuel gas for fuel cells, in which the fuel gas, in particular natural gas, is desulphurized, and the desulphurized fuel gas is fed to a reforming catalyst (5), and the sulphur content of the desulphurized fuel gas is monitored by monitoring the sequence of the reforming process, **characterized in that** a part-stream of the desulphurized fuel gas is passed through a separate reforming catalyst (2) to a detector device (4) and subjected to an endothermic reforming process, and **in that** a drop in the heat demand of the reforming process is regarded as a signal of an increase in the sulphur content of the fuel gas.

2. Method according to Claim 1, **characterized in that** to monitor the sequence of the reforming process the heat demand of the latter is measured.

3. Method according to Claim 2, **characterized in that** the reforming process is carried out adiabatically, and the drop in the temperature ΔT of the fuel gas is measured.

4. Method according to Claim 3, **characterized in that** a reduction in the drop in temperature ΔT is regarded as a measure of a rise in the sulphur content in the fuel gas.

5. Method according to Claim 4, **characterized in that** if a predetermined value ΔTlimit for the temperature drop ΔT is undershot, an alarm signal is emitted.

6. Method according to Claim 2, **characterized in that** the reforming process is carried out isothermally by the supply of heat, and the heat quantity ΔQ which is supplied is measured.

7. Method according to Claim 6, **characterized in that** a reduction in the heat quantity ΔQ which is supplied is regarded as a measure of a rise in the sulphur content in the fuel gas.

8. Method according to Claim 6 or 7, **characterized in that** the heat is supplied by electrical heating, and **in that** the electric power consumed is measured to ascertain the heat quantity ΔQ which has been supplied.

9. Method according to Claim 7 or 8, **characterized in that** if a predetermined value ΔQlimit for the heat quantity ΔQ supplied is undershot, an alarm signal is emitted.

10. Method according to Claim 5 or 9, **characterized in that** when the alarm signal occurs, the generation of the fuel gas is interrupted or a measure is taken to improve the desulphurization of the fuel gas.

11. Apparatus for producing a desulphurized fuel gas, in particular natural gas, for fuel cells, having a desulphurization device (1) through which the fuel gas flows and downstream of which is connected a reforming catalyst (5), a monitoring device for monitoring the sequence of the reforming process being provided for the purpose of monitoring the sulphur content of the desulphurized fuel gas, **characterized in that** connected downstream of the desulphurizing device (1), for the purpose of monitoring the sulphur content of the desulphurized fuel gas, there is a detector device (4), which comprises a reforming catalyst (2), through which a part-stream of the desulphurized fuel gas flows, and the monitoring device (3) for monitoring the sequence of the endothermic reforming process which takes place in the reforming catalyst (2), the monitoring device (3) being designed in such a way that it generates a signal representing the rise in the sulphur content of the fuel gas in response to a deterioration in the reforming process.

12. Apparatus according to Claim 11, **characterized in that** the monitoring device (3) is designed in such a way that to monitor the sequence of the reforming process the heat demand of the latter is measured.

13. Apparatus according to Claim 12, **characterized in that** the reforming catalyst (2) is designed to carry out the reforming process adiabatically, and **in that** the monitoring device (3) comprises means for measuring the drop in temperature ΔT of the fuel gas.

14. Apparatus according to Claim 13, **characterized in that** the monitoring device (3) is designed in such a way that a reduction in the drop in temperature ΔT is regarded as a measure of a rise in the sulphur content in the fuel gas.

15. Apparatus according to Claim 14, **characterized in that** the monitoring device (3) includes means for generating an alarm signal if a predetermined value ΔT limit for the temperature drop ΔT is undershot.

16. Apparatus according to Claim 12, **characterized in that** the reforming catalyst (2) is designed to carry out the reforming process isothermally by the supply of heat, and **in that** the monitoring device (3) comprises means for measuring the heat quantity ΔQ which is supplied.

17. Apparatus according to Claim 16, **characterized in that** the monitoring device (3) is designed in such a way that a reduction in the heat quantity ΔQ which is supplied is regarded as a measure of a rise in the sulphur content in the fuel gas.

18. Apparatus according to Claim 16 or 17, **characterized in that** the detector device (4) includes means for supplying the heat to the reforming catalyst (2) by electrical heating, and **in that** the monitoring device (3) is designed to ascertain the heat quantity ΔQ which has been supplied by measuring the electric power consumed.

19. Apparatus according to Claim 17 or 18, **characterized in that** the monitoring device (3) includes means for generating an alarm signal if a predetermined value ΔQlimit for the heat quantity ΔQ supplied is undershot.

20. Apparatus according to one of Claims 11 to 19, **characterized in that** the reforming catalyst (2) of the detector device (4) is provided as part of a reforming catalyst (5) which is connected upstream of the fuel cells and is used to reform the fuel gas fed to them for operation.

## Revendications

1. Procédé de génération d'un gaz de combustion désulfuré pour des cellules à combustible, procédé dans lequel le gaz de combustion, en particulier du gaz naturel, est désulfuré, dans lequel le gaz de combustion désulfuré est amené à un catalyseur de reformage (5), dans lequel la teneur en soufre du gaz de combustion désulfuré est surveillée, le déroulement du processus de reformage étant surveillé, **caractérisé en ce qu'**un flux partiel du gaz de combustion désulfuré traverse un catalyseur de reformage distinct (2) d'un dispositif de détection (4) et est soumis à un processus de reformage endothermique et **en ce qu'**une décroissance du besoin en chaleur du processus de reformage est estimée sous forme d'un signal d'une augmentation de la teneur en soufre du gaz de combustion.

2. Procédé selon la revendication 1, **caractérisé en ce que** le besoin en chaleur du processus de reformage est mesuré afin de surveiller le déroulement dudit processus.

3. Procédé selon la revendication 2, **caractérisé en ce que** le processus de reformage est effectué de manière adiabatique et l'abaissement de température Δ_T du gaz de combustion est alors mesuré.

4. Procédé selon la revendication 3, **caractérisé en ce qu'**une réduction de l'abaissement de température Δ_T est estimée en tant que mesure d'une augmentation de la teneur en soufre dans le gaz de combustion.

5. Procédé selon la revendication 4, **caractérisé en ce que**, si l'abaissement de température Δ_T descend au-dessous d'une valeur prédéterminée Δ_T_limite, un signal d'alarme est transmis.

6. Procédé selon la revendication 2, **caractérisé en ce que** le processus de reformage est effectué de manière isothermique moyennant l'apport de chaleur et la quantité de chaleur apportée Δ_Q est alors mesurée.

7. Procédé selon la revendication 6, **caractérisé en ce qu'**une diminution de la quantité de chaleur apportée Δ_Q est estimée en tant que mesure d'une augmentation de la teneur en soufre dans le gaz de combustion.

8. Procédé selon la revendication 6 ou 7, **caractérisé en ce que** l'apport de chaleur se produit par un chauffage électrique et **en ce que** la puissance électrique absorbée est mesurée pour déterminer la quantité de chaleur apportée Δ_Q.

9. Procédé selon la revendication 7 ou 8, **caractérisé en ce que**, si la quantité de chaleur apportée Δ_Q descend au-dessous d'une valeur prédéterminée Δ_Q_limite, un signal d'alarme est transmis.

10. Procédé selon la revendication 5 ou 9, **caractérisé en ce qu'**en cas d'apparition d'un signal d'alarme, la génération du gaz de combustion est interrompue ou une mesure est prise pour améliorer la désulfuration du gaz de combustion.

11. Dispositif pour la génération d'un gaz de combustion désulfuré, en particulier du gaz naturel, pour des cellules à combustible avec un système de désulfuration (1) parcouru par le gaz de combustion et qui est placé en aval d'un catalyseur de reformage (5) et où un système de surveillance du déroulement du processus de reformage est prévu afin de surveiller la teneur en soufre du gaz de combustion désulfuré, **caractérisé en ce qu'**un système de détection (4) est placé en aval du système de désulfuration (1) afin de surveiller la teneur en soufre du gaz de combustion désulfuré, lequel dispositif comprend un catalyseur de reformage (2) parcouru par un flux partiel du gaz de combustion désulfuré et le système de surveillance (3) servant à surveiller le déroulement du processus de reformage endothermique se produisant dans le catalyseur de reformage (2), le système de surveillance (3) étant conçu de manière telle qu'il génère un signal représentant l'augmentation de la teneur en soufre du gaz de combustion en cas de décroissance du processus de reformage.

12. Dispositif selon la revendication 11, **caractérisé en ce que** le système de surveillance (3) est conçu de manière telle que le besoin en chaleur du processus de reformage est mesuré afin de surveiller son déroulement.

13. Dispositif selon la revendication 12, **caractérisé en ce que** le catalyseur de reformage (2) est conçu pour effectuer le processus de reformage de manière adiabatique et **en ce que** le système de surveillance (3) comprend des moyens de mesure de l'abaissement de température Δ_T du gaz de combustion.

14. Dispositif selon la revendication 13, **caractérisé en ce que** le système de surveillance (3)est conçu de manière telle qu'une réduction de l'abaissement de température Δ_T est estimée en tant tant que mesure de l'augmentation de la teneur en soufre dans le gaz de combustion.

15. Dispositif selon la revendication 14, **caractérisé en ce que** le système de surveillance (3) comprend des moyens pour générer un signal d'alarme si l'abaissement de température Δ_T descend au-dessous d'une valeur prédéterminée Δ_T_limite.

16. Dispositif selon la revendication 12, **caractérisé en ce que** le catalyseur de reformage (2) est conçu pour effectuer le processus de reformage de manière isothermique moyennant apport de chaleur et **en ce que** le système de surveillance (3) comprend des moyens de mesure de la quantité de chaleur apportée Δ_Q.

17. Dispositif selon la revendication 16, **caractérisé en ce que** le système de surveillance (3)est conçu de manière telle qu'une diminution de la quantité de chaleur apportée Δ_Q est estimée en tant que mesure de l'augmentation de la teneur en soufre dans le gaz de combustion.

18. Dispositif selon la revendication 16 ou 17, **caractérisé en ce que** le système de détection (4) comprend des moyens pour apporter de la chaleur au catalyseur de reformage (2) via un chauffage électrique et **en ce que** le système de surveillance (3) pour déterminer la quantité de chaleur apportée Δ_Q est réalisé par une mesure de la puissance électrique absorbée.

19. Dispositif selon la revendication 17 ou 18, **caractérisé en ce que** le système de surveillance (3) comprend des moyens pour générer un signal d'alarme si la quantité de chaleur apportée Δ_Q descend au-dessous d'une valeur prédéterminée Δ_Q_limite.

20. Dispositif selon l'une quelconque des revendications 11 à 19, **caractérisé en ce que** le catalyseur de reformage (2) du système de détection (4) est prévu comme composant d'un catalyseur de reformage (5) placé en amont des cellules à combustible et servant au reformage de ce gaz de combustion amené pour le fonctionnement.
